# EUROPEAN PATENT SPECIFICATION

(11) **EP 2 786 917 B1**
(45) Date of publication and mention of the grant of the patent: **20.07.2016**
(21) Application number: 14163088.9
(22) Date of filing: 01.04.2014
(51) Int. Cl.: B62D 15/02, B60R 1/00, G08G 1/16, G01C 21/00, H04N 5/232

(54) **Birds-eye view parking assist system and method**
Vogelperspektives Parkassistenzsystem und entsprechendes Verfaren
Système et méthode d'assistance au parquage vu du ciel

(30) Priority: 01.04.2013 CN 201310109884
(43) Date of publication of application: 08.10.2014
(73) Proprietor: Delphi Technologies, Inc., Troy MI 48007 (US)
(72) Inventor: Yu, Mengmeng, 201208 Pudong (CN); Zhou, Shengyan, 200131 Pudong (CN); Ma, Guanglin, 200129 Pudong (CN)
(74) Representative: Delphi France SAS

(56) References cited:
- EP-A1- 2 207 350
- EP-A2- 1 148 461
- WO-A1-2005/120932
- WO-A1-2009/044513
- WO-A1-2011/155464
- US-A1- 2007 146 166

## Description

### TECHNICAL FIELD OF INVENTION

This disclosure generally relates to the field of vehicle safety, and more particularly relates to a birds-eye view parking assist system and method.

### BACKGROUND OF INVENTION

As the number of vehicles (e.g. automobiles, trucks) increases, parking issues are getting increasingly acute and it is becoming a difficult problem in urban traffic. During parking, the operator is required to observe and judge the surroundings in a narrow and compact space and meanwhile control the steering wheel, accelerator, and brake in a short time. This puts forward high requirements for driving skills and reaction sensitivity. Therefore, it is necessary to develop a parking assist system to help the operator to complete parking operation. Intelligent parking or a parking assist system has become a key point in domestic and overseas research. The intelligent parking system usually comprises a sensing system, a control system, an execution system, etc. The control system is the core of the intelligent parking system, which primarily adjusts the vehicle state according to the information of the sensor and the operation information of the operator to find a proper path during vehicle parking and guide the vehicle to complete parking operation. A three-hundred-sixty degree (360°) Birds-eye view system is an effective parking and reversing assist system. However, in actual life, the operator's lack of experience still cannot flexibly complete parking at the parallel or vertical parking location even with assist of the birds-eye view system. Document EP 1 148 461 A2 relates to a driving operation assisting technique for providing an assistance in a vehicle driving operation.

### SUMMARY OF THE INVENTION

Described herein is a birds-eye view system-based parking assist method to overcome the defects in the prior art. The birds-eye view system-based parking assist method is characterized by the fact that, according to or based on the information of a birds-eye view system, a parking assist device assists with parking a vehicle. The method includes a step where the parking assist device selects a parking mode according to a mode select signal, wherein the parking mode includes parallel parking mode and angular parking mode. The method includes a step where the parking assist device receives speed information and steering information of a vehicle and panorama video information of the birds-eye view system, and calculates a real-time running direction and a position of the vehicle. The method includes a step where, based on the currently selected mode, the parking assist device outputs parking guide information according to or based on the panorama video information of the birds-eye view system and the current running direction and position of the vehicle, and displays the parking guide information on the user interface of the vehicle.

If the parallel parking mode is selected, the method may include a steps where the parking assist device outputs the target parking space information to the user interface according to the input parallel parking model select signal, and the parking assist device judges if the vehicle reaches the initial stop point, and if so, outputs the parking guide information in the parallel parking mode to the user interface until the vehicle completes parking.

If the parallel parking mode is selected, the method may include a steps where the parking assist device outputs the target parking space information to the user interface according to the input angular parking model select signal, and the parking assist device judges if the vehicle reaches the initial stop point, and if so, outputs the parking guide information in the angular parking mode to the user interface until the vehicle completes parking.

In general, parking information provided by the parking assist device includes guide line and steering information. Compared with the prior art, the method provided herein has the following advantages: 1) the operator can easily complete parallel parking and angular parking through the method of the present invention; and 2) based on the panorama of the birds-eye view system, the method of the present invention can ensure safety and reliability in the parking process.

In accordance with one embodiment, a method of operating a birds-eye view based system to assist with parking of a vehicle is provided. The method includes the step of selecting a parking mode based on a mode select signal, wherein the parking mode includes a parallel parking mode and an angular parking mode. The method also includes the step of receiving speed information and steering information of a vehicle and panorama video information from the birds-eye view system of an area about the vehicle. The method also includes the step of calculating a real-time running direction and a position of the vehicle based on the speed information and the steering information. The method also includes the step of outputting parking guide information based on the panorama video information, the current running direction, and the position of the vehicle to a display configured to show an operator the parking guide information on a user interface of the vehicle.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a flowchart in accordance with one embodiment;
Fig. 2 is calculation chart of the transit position in the angular parking mode in accordance with one embodiment; and
Fig. 3 is calculation chart from the transit position to the startup position in the angular parking mode in accordance with one embodiment.

### DESCRIPTION OF THE PREFERED EMBODIMENT

The present invention is further described in detail with the reference to the attached drawings and embodiments. The embodiment is implemented on the premise of the technical scheme of the present invention, providing detail implementation ways and specific operation process. However, the protection scope of the present invention is not limited to the following embodiment.

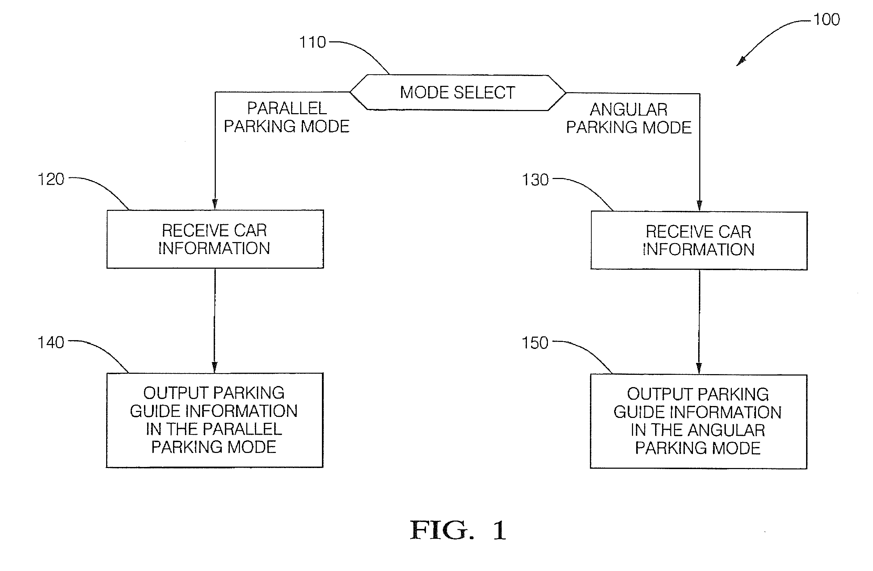

Fig. 1 illustrates a non-limiting example of a birds-eye view system-based parking assist method, hereafter, the method 100. In general, the method 100 uses information from a birds-eye view system (not shown) to operate a parking assist device to assist an operator with parking a vehicle. The parking assist device may include a display and controller or processor that receives images from a camera, for example part of a birds-eye view system, and processes those images for display to the operator of the vehicle.

At step 110, MODE SELECT, the parking assist device selects a parking mode according to a mode select signal that, for example, may be determined by the operator pressing a button. By way of further example, the parking mode includes a parallel parking mode and an angular parking mode.

At step 120 or 130, RECEIVE CAR INFORMATION, the parking assist device also receives speed information and steering information of a vehicle, and panorama video information from the birds-eye view system. Step 120 or 130 may also include the parking assist device calculating a real-time running direction and a position of the vehicle based on the speed information and the steering information. In the currently selected mode, the parking assist device outputs parking guide information according to or based on the panorama video information of the birds-eye view system, and the current running direction and position of the vehicle. By way of example, the parking guide information may include guide line and steering information, and the parking guide information may be displayed on a user interface of the vehicle such as a video monitor or reconfigurable display in a dashboard of the vehicle.

In general, the parallel parking mode is configured to help an operator to park the vehicle in, for example, a parallel parking location parallel to and alongside a roadway. If the parallel parking mode is selected by step 110, step 120 may include calculating a real-time running direction and a position of the vehicle based on the speed information and the steering information to prepare display information for display to the operator.

Step 140, OUTPUT PARKING GUIDE INFORMATION IN THE PARALLEL PARKING MODE, may include steps where the parking assist device outputs target parking space information including a rectangular frame and a checkmark flag to the user interface corresponding to the input of a parallel parking model select signal.

The functions or purpose of the rectangular frame may include, but are not limited to, confirming the target parking space, where the size of the rectangular frame represents the minimum parking space required when the parking assist system is used for parking. If the parking location is very small and cannot be matched or fitted with the rectangular frame, then the vehicle cannot fit in the parking space, so the vehicle cannot be safely parked in the parking space indicated with the parking assist system.

The functions or purpose of the rectangular frame may also include confirming if the vehicle will collide with other vehicles (vehicles in the front and behind the host vehicle) or if there is some other object in the parking location. If there is an object in the rectangular frame that the vehicle may collide with, the presence of the object may be indicated to the operator, whereby the operator may adjust the startup position of the vehicle.

Step 120 or 130, RECEIVE CAR INFORMATION, may also include confirming if the vehicle is parallel to the target parking space. If confirmed, step 140 or 150 may include displaying a checkmark flag used for helping the operator to easily confirm the position of the rectangular frame.

Step 120 or 130, RECEIVE CAR INFORMATION, may also include steps where the parking assist device judges if the vehicle reaches the initial stop point, and if so, outputs the guide line and steering information in the parallel parking mode to the user interface, and then the operator rotates the steering wheel according to the guide line and the steering information until parking is completed.

If the angle parking mode is selected, step 150, OUTPUT PARKING GUIDE INFORMATION IN THE ANGULAR PARKING MODE, may include steps where the method 100 assists the operator to angular park the vehicle in an angular parking space. Step 130 and/or 150 may include steps where the parking assist device outputs target parking space information including a rectangular frame to the user interface according to the input angular parking model select signal. The parking assist device may judge or determine if the vehicle reaches an initial stop point, and if so, outputs (i.e. - displays) the guide line and steering information in the angular parking mode to the user interface, and then the operator rotates the steering wheel to turn around or moves the vehicle forward according to the guide line and the steering information until parking is completed.

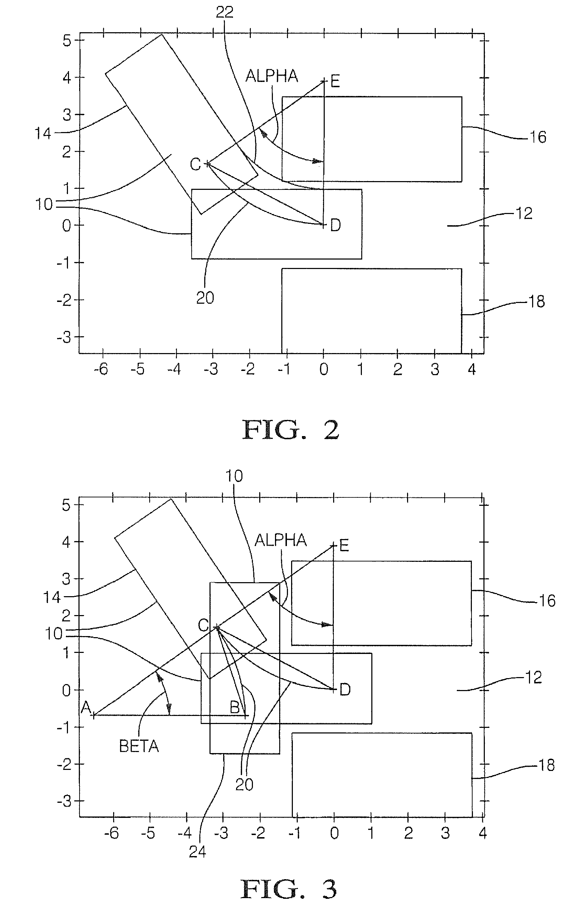

Fig. 2 illustrates a non-limiting example of a vehicle 10 at location D and location C. By way of example, locations C and D correspond to a point between the rear wheels of the vehicle 10 when the vehicle 10 is at the two positions illustrated. The parking assist device and/or the method 100 is now described by way of further non-limiting examples of calculations of the angular parking mode. When the vehicle 10 leaves the parking location 12 and reaches the transition position 14, it is required that no part of the vehicle 10 can make contact with the adjacent parking spaces 16 and 18, but the vehicle is not expected to run too far. Those two constraints show that the minimum steering radius (steering limit of the steering wheel) shall be calculated when the vehicle leaves the parking space, as shown in Fig. 2.

Initially, assume that coordinates of D (i.e. location D) are (0, 0), where D is the point where the vehicle is parallel to the parking space; coordinates of the steering center of the steering arc 20 at location E are (0, 0-steering radius), and the minimum steering radius 22 is Rmin. It can be ensured that when the steering angle is identical, in comparison with other steering radius, the demand on the horizontal distance is minimum because, as long as the size of the parking space and the steering radius of the vehicle are provided, it can be easily calculated which part of the vehicle 10 is closest to the adjacent parking space 16 during steering. Therefore, the forward path of the vehicle 10 from the parking space can be calculated to prevent the rear wheels or other parts of the vehicle 10 from colliding with other parking spaces in the periphery.

Fig. 3 illustrates a non-limiting example of an instance when the vehicle10 moves from an initial position 24 to the transition position 14. Also illustrated is angle Alpha corresponding to angle AED, and angle Beta corresponding to angle EAB. According to the habit of the analysis aim the position of location B is acquired from the backward angle; if B is not changed, Alpha will not change, and C will also not change. But this result is not desired. During analysis, the initial position is random and location C is also random. It is suggested that if the vehicle 10 moves from a start position at location B to an end position at location D via location C, two steering arcs circles (center at location A and location E) should be tangent to each other and angle Beta add angle Alpha equal to 90 degree. Therefore segment AC should be equal to Segment AB.

Providing that the determined appropriate value of Alpha can enable the vehicle to reach D from B through C, Alpha is not changed; steering radius EC=ED= Rmin; the coordinates of the steering center E are (0, 0- Rmin); and thus, C and Beta angle can be calculated (90-determined appropriate value of Alpha), while B can be calculated by the algorithm mentioned in the second part. Assume for "certain suitable value of Alpha" can make the vehicle drive from B through C to D. Because Alpha is fixed and turning radius EC = ED = Rmin and turning center E = (0, 0-Rmin), therefore the coordinates of location B and location C are known, angle Beta and the isosceles triangle ABC, and then BC can be calculated. According to law of cosines, AC and AB can be calculated.

By way of further explanation it can be determined whether the value of Alpha is appropriate by determining if a certain value of Alpha is not a suitable value. The coordinates of C and B and Beta angle can be obtained. In this example AC is not equal to AB. However, ABC is still used as an isosceles triangle to calculate the length of AC through the law of cosines, and the length value of AC is used as the steering radius (Rfirst) of the first steering. With Rfirst, the BA distance (Xb- Rfirst, Yb) can be calculated. Therefore, as long as A is provided, we can calculate the lengths of AC and AC.

AC will not equal to AB which means the absolute value of (AC-AB) will not equal 0, Triangle ABC is not an isosceles triangle there will be no two tangent circles can pass through B, C and D it also means current Alpha is not "certain suitable value of Alpha". Then we change the Alpha a bit do the above procedure again until we have the absolute value of (AC-AB) < Thread hold (0.2).

A non-limiting example of an algorithm is now described.
Step 1: Fix points E and D, draw circles by angle of Alpha (from 10° to 90°, step size 2); and for each alpha, calculate Beta (90-Alpha) and C according the laws of cosines.
Step 2: Calculate B by D according to compensation.
Step 3: Calculate BC. Through Beta and BC calculated with the laws of cosines, we can obtain the distance AC; providing that the center of circle is A and the steering radius is Rfirst, the coordinates (xb- Rfirst,yb) of point A can be calculated.
Step 4: Calculate AC, AB and |AC-AB| through A.
Step 5: Record the results, Alpha, Beta, Rfirst, minimum value of |AC-AB|.
Step 6: If the minimum value of |AC-AB|<0.2, ACB may be roughly considered as an isosceles triangle. By this time, we can draw two circles passing through B, C, and D. We also need to consider the restraint of the minimum value, and Rfirst shall be set to >=Rmin.
Step 7: Besides, B and D are not connected. This means that the vehicle is too far away from the parking space.
Step 8: Finally, we obtain the right-most Beta value and Rfirst, and meanwhile can calculate point C through point B according to the law of cosines.
Step 9: The center of the existing coordinate system is D, but for BEV system, the center shall be B, so the coordinates shall be changed. Deducting the coordinates of B by all coordinates can move the center to B.

While this invention has been described in terms of the preferred embodiments thereof, it is not intended to be so limited, but rather only to the extent set forth in the claims that follow.

## Claims

1. A birds-eye view system-based parking assist method (100), according to the information of a birds-eye view system a parking assist device assists parking, wherein the method (100) comprises steps that:
the parking assist device selects a parking mode according to a mode select signal, wherein the parking mode includes parallel parking mode and angular parking mode;
the parking assist device receives speed information and steering information of a vehicle (10) and panorama video information of the birds-eye view system, and calculates a real-time running direction and a position of the vehicle (10); and,
in the currently selected mode, the parking assist device outputs parking guide information according to the panorama video information of the birds-eye view system and the current running direction and position of the vehicle (10), and displays the parking guide information on the user interface of the vehicle (10), **characterized in that** the parking guide information includes guide line and steering information, wherein the parking assist device outputs target space information including a rectangular frame and a checkmark flag according to the input parking model select signal, wherein a size of the rectangular frame represents a minimum parking space and the checkmark flag confirms the position of the rectangular frame.

2. The birds-eye view system-based parking assist method (100) according to claim 1, wherein the parallel parking mode includes steps that
the parking assist device outputs target parking space information to the user interface according to the input parallel parking model select signal; and
the parking assist device judges if the vehicle (10) reaches the initial stop point, and if so, outputs the parking guide information in the parallel parking mode to the user interface until parking is completed.

3. The birds-eye view system-based parking assist method (100) according to claim 1 or 2, wherein the angular parking mode includes steps that
the parking assist device outputs target parking space information to the user interface according to the input angular parking model select signal; and
the parking assist device judges if the vehicle (10) reaches the initial stop point, and if so, outputs the parking guide information in the angular parking mode to the user interface until parking is completed.

## Patentansprüche

1. Ein Vogelperspektivesystem-basiertes Parkassistenzverfahren (100), in dem gemäß der Information eines Vogelperspektivesystems eine Parkassistenzvorrichtung ein Einparken unterstützt, wobei das Verfahren (100) die Schritte aufweist, dass:
die Parkassistenzvorrichtung einen Parkmodus gemäß einem Modus-Auswahlsignal auswählt, wobei der Parkmodus einen "parallel Parken"-Modus und einen "Parken im Winkel"-Modus umfasst;
die Parkassistenzvorrichtung eine Geschwindigkeitsinformation und Lenkinformation eines Fahrzeugs (10) und eine Panoramavideoinformation des Vogelperspektivesystems empfängt und eine Echtzeit-Fahrtrichtung und eine Position des Fahrzeugs (10) berechnet; und,
in dem aktuell gewählten Modus, die Parkassistenzvorrichtung eine Parkführinformation gemäß der Panoramavideoinformation des Vogelperspektivesystems und der aktuellen Fahrtrichtung und Position des Fahrzeugs (10) ausgibt und die Parkführinformation auf der Benutzerschnittstelle des Fahrzeugs (10) anzeigt, **dadurch gekennzeichnet, dass** die Parkführinformation Führlinie- und Lenkinformation umfasst, wobei die Parkassistenzvorrichtung eine Sollplatzinformation ausgibt, einschließlich eines rechteckigen Rahmens und eines Kontrollmarkierung-Flags gemäß dem Eingangs-Parkmodell-Auswahlsignal, wobei eine Größe des rechteckigen Rahmens einen Minimum-Parkplatz repräsentiert und das Kontrollmarkierung-Flag die Position des rechteckigen Rahmens bestätigt.

2. Das Vogelperspektivesystem-basierte Parkassistenzverfahren (100) gemäß Anspruch 1, wobei der "parallel Parken"-Modus Schritte umfasst, dass die Parkassistenzvorrichtung eine Sollparkplatzinformation an die Benutzerschnittstelle gemäß dem Eingangs-"parallel Parken"-Modell-Auswahlsignal ausgibt; und
die Parkassistenzvorrichtung beurteilt, ob das Fahrzeug (10) den anfänglichen Stopppunkt erreicht, und wenn ja, die Parkführinformation in dem "parallel Parken"-Modus an die Benutzerschnittstelle ausgibt, bis das Parken abgeschlossen ist.

3. Das Vogelperspektivesystem-basierte Parkassistenzverfahren (100) gemäß Anspruch 1 oder 2, wobei der "Parken im Winkel"-Modus Schritte umfasst, dass
die Parkassistenzvorrichtung eine Sollparkplatzinformation an die Benutzerschnittstelle gemäß dem Eingangs-" Parken im Winkel"-Modell-Auswahlsignal ausgibt; und
die Parkassistenzvorrichtung beurteilt, ob das Fahrzeug (10) den anfänglichen Stopppunkt erreicht, und wenn ja, die Parkführinformation in dem "Parken im Winkel"-Modus an die Benutzerschnittstelle ausgibt, bis das Parken abgeschlossen ist.

## Revendications

1. Procédé d'assistance au stationnement basé sur un système de vision sur 360° (100) par lequel un dispositif d'assistance au stationnement assiste le stationnement selon les informations d'un système de vision sur 360°,
dans lequel le procédé (100) comprend les étapes suivantes :
le dispositif d'assistance au stationnement sélectionne un mode de stationnement en accord avec un signal de sélection de mode, dans lequel le mode de stationnement inclut un mode de stationnement parallèle et un mode de stationnement angulaire ;
le dispositif d'assistance au stationnement reçoit des informations de vitesse et des informations de direction d'un véhicule (10) et des informations vidéo panoramiques du système de vision sur 360°, et calcule une direction de déplacement en temps réel et une position du véhicule (10) ; et
dans le mode actuellement sélectionné, le dispositif d'assistance au stationnement délivre des informations de guidage de stationnement en accord avec les informations vidéo panoramiques du système de vision sur 360° et avec la direction de déplacement actuelle et la position actuelle du véhicule (10), et affiche les informations de guidage de stationnement sur l'interface utilisateur du véhicule (10),
**caractérisé en ce que** les informations de guidage de stationnement incluent des lignes-guides et des informations de direction, dans lequel le dispositif d'assistance au stationnement délivre des informations sur l'espace cible incluant un cadre rectangulaire et un drapeau de marquage en accord avec le signal de sélection de mode de stationnement entré, dans lequel une taille du cadre rectangulaire représente un espace de stationnement minimum et le drapeau de marquage confirme la position du cadre rectangulaire.

2. Procédé d'assistance au stationnement basé sur un système à vision sur 360° (100) selon la revendication 1, dans lequel le mode de stationnement parallèle inclut les étapes suivantes
le dispositif d'assistance au stationnement délivre des informations sur l'espace de stationnement cible à l'interface utilisateur en accord avec le signal de sélection de mode de stationnement parallèle entré ; et
le dispositif d'assistance au stationnement juge si le véhicule (10) atteint le point d'arrêt initial et si oui, il délivre les informations de guidage de stationnement dans le mode de stationnement parallèle à l'interface utilisateur jusqu'à ce que le stationnement soit terminé.

3. Procédé d'assistance au stationnement basé sur un système de vision sur 360° (100) selon la revendication 1 ou 2, dans lequel le mode de stationnement angulaire inclut les étapes suivantes
le dispositif d'assistance au stationnement délivre des informations concernant l'espace de stationnement cible à l'interface utilisateur en accord avec le signal de sélection de mode de stationnement angulaire entré ; et
le dispositif d'assistance au stationnement juge si le véhicule (10) atteint le point d'arrêt initial et si oui, il délivre les informations de guidage de stationnement dans le mode de stationnement angulaire à l'interface utilisateur jusqu'à ce que le stationnement soit terminé.
